(19) Europäisches Patentamt
European Patent Office
Office européen des brevets

(11) Numéro de publication: 0 343 019 A2

(12) DEMANDE DE BREVET EUROPEEN

(21) Numéro de dépôt: 89400982.8

(22) Date de dépôt: 11.04.89

(51) Int. Cl.[4]: C 07 F 7/08
G 02 F 1/35

(30) Priorité: 20.04.88 FR 8805214

(43) Date de publication de la demande:
23.11.89 Bulletin 89/47

(84) Etats contractants désignés:
CH DE FR GB IT LI

(71) Demandeur: RHONE-POULENC CHIMIE
25, quai Paul Doumer
F-92408 Courbevoie Cédex (FR)

(72) Inventeur: Soula, Gérard
33, rue Nungesser
F-69330 - Meyzieu (FR)

Mignani, Gérard
2, avenue des Frères Lumière
F-69008 - Lyon (FR)

(74) Mandataire: Esson, Jean-Pierre et al
Rhône-Poulenc Interservices Service Brevets Chimie 25, quai Paul Doumer
F-92408 Courbevoie Cedex (FR)

# (54) Composés organosiliciés, matériaux et dispositifs électrooptiques les contenant.

(57) La présente invention concerne de nouveaux composés organosiliciés, leurs procédés de fabrication et leurs applications en optique non linéaire.

Les composés organosiliciés de l'invention ont la formule générale suivante :

$$R_1-(\underset{R_4}{\overset{R_3}{|}}{Si})_n-R_2$$

dans laquelle :

n est un nombre entier compris entre 1 et 20,

$R_1$ représente un groupement donneur d'électrons,

$R_2$ représente un groupement accepteur d'électrons,

$R_3$ et $R_4$, identiques ou différents, représentent un radical alkyl, aryl, l'hydrogène ou un radical $R_1$ ou $R_2$.

Ces composés présentent un coefficient β d'hyperpolarisabilité du second ordre non nul et sont actifs en optique non linéaire.

Ils peuvent notamment être utilisés dans les dispositifs de télécommunication.

EP 0 343 019 A2

## Description

## COMPOSES ORGANOSILICIES, MATERIAUX ET DISPOSITIFS ELECTROOPTIQUES LES CONTENANT

L'invention concerne des nouveaux composés organosiliciés, leurs procédés de fabrication, leurs applications en optique non linéaire.

Elle se rapporte plus particulièrement à des composés organosiliciés hyperpolarisables qui sont notamment actifs en optique non linéaire.

Comme l'indiquent J. Zyss et I. Ledoux dans l'article paru dans "L'Echo des Recherches", 1er trimestre 1987 sous le titre "Molécules organiques et traitement du signal optique", le développement des télécommunications optiques requiert la réalisation de composants utilisant des matériaux de forte susceptibilité non linéaire du deuxième ou du troisième ordre.

De nombreux composés tant inorganiques qu'organiques sont utilisés sous différentes formes telles que solutions, polymères, polymères dopés, couches monomoléculaires, cristaux liquides, monocristaux, polymères cristaux liquides ou analogues.

Les composés organiques sont très intéressants car la synthèse d'une très grande variété de produits est généralement possible. De plus, la plupart des composés organiques présentent une résistance élevée aux agressions extérieurs (humidité, acidité, oxydation, etc).

J.F. Nicoud et R.J. Twieg dans leur mémoire intitulé "Design and synthesis of organic molecular compounds for efficient second harmonic generation" répertorient différentes molécules susceptibles d'être actives en optique non linéaire.

Ces molécules ont comme squelette des chaînes carbonées comprenant généralement des cycles aromatiques substitués d'une part par des groupements donneurs d'électrons et d'autre part par des groupements accepteurs d'électrons.

Ainsi, la délocalisation et la circulation des électrons $\pi$ et la non-centrosymétrie de la molécule engendrent de fortes hyperpolarisabilité du second et troisième ordre.

Des efforts de recherche importants sont continuellement développés pour découvrir et fabriquer de nouveaux composés présentant une activité en optique non linéaire.

Ainsi, l'invention propose de nouveaux composés organométalliques et plus particulièrement organosiliciés qui présentent une hyperpolarisabilité quadratique ou du second ordre non nulle.

A cet effet, l'invention propose de nouveaux composés organosiliciés de formule générale :

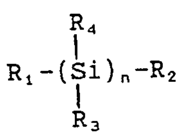

dans laquelle :

- n est un nombre entier compris entre 1 et 20
- $R_1$ représente un groupement donneur d'électrons
- $R_2$ représente un groupement accepteur d'électrons
- $R_3$ représente un radical alkyle comprenant de 1 à 8 atomes de carbone, l'hydrogène, un radical aryle, un radical $R_1$ ou $R_2$.
- $R_4$ représente un radical alkyle comprenant de 1 à 8 atomes de carbone, l'hydrogène, un radical aryle, un radical $R_1$ quand $R_3$ ne représente pas un radical $R_2$, ou un radical $R_2$ quand $R_3$ ne représente pas un radical $R_1$.

Selon une autre caractéristique de l'invention, le groupement $R_1$, donneur d'électrons, a la formule générale suivante :

$-R_5-D_m$

dans laquelle :

- $R_5$ représente un radical arylène
- D identique ou différent représente l'hydrogène ou un radical donneur d'électrons choisi dans le groupe comprenant les radicaux amino, alkylamino, dialkylamino, arylamino, hydroxyl, thiolo, alkylthio, arylthio, alkoxy, aryloxy, halogénoalkyl, oxy,

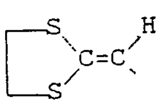 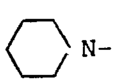 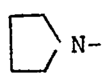 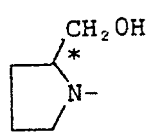

m est un nombre entier égal à 1, 2 ou 3.

D ne représentant pas l'hydrogène, quand le groupement $R_2$ est un radical aryl non substitué par un ou plusieurs groupements attracteur d'électrons.

Les groupements $R_1$ préférés de l'invention sont :

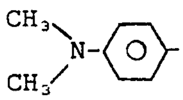 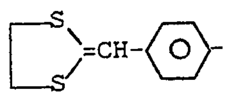 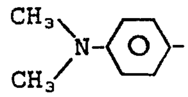

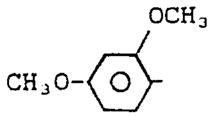 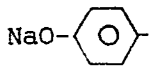 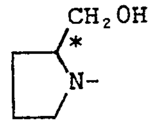

Selon une nouvelle caractéristique de l'invention, le groupement $R_2$, accepteur d'électrons, a la formule générale suivante :

$-R_6-A_p$

dans laquelle :

- $R_6$ représente un radical arylène
- p est un nombre entier égal à 1, 2 ou 3
- A identique ou différent représente l'hydrogène ou un radical accepteur d'électrons choisi dans le groupe comprenant les radicaux halogéno, nitro, cyano, nitrosile, d'ammonium quaternaire, pyridinyloxy, $CF_3$, d'alkyl ammonium quaternaire, acyl, alkoxysulfonyl, aryloxysulfonyl, ou les radicaux de formules suivantes :

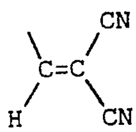 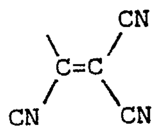 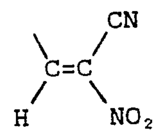

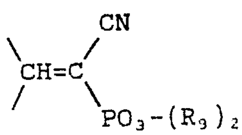 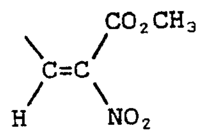

- $R_9$ représentant un radical alkyl de 1 à 6 atomes de carbone ou un radical aryl

et en ce que A ne représente pas l'hydrogène quand $R_1$ est un radical aryle non substitué par un ou plusieurs radicaux donneur d'électrons.

Les groupements $R_2$ préférés de l'invention sont :

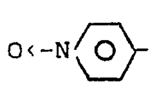 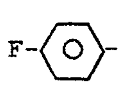 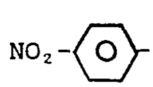 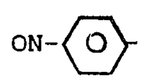

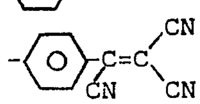 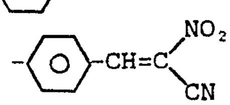 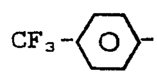

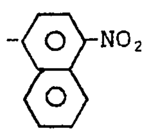 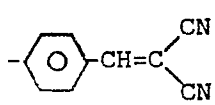 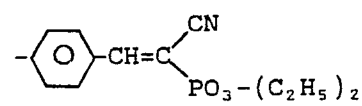

Selon une autre caractéristique de l'invention, les groupements $R_3$ et $R_4$ qui peuvent être identiques ou différents sont choisis dans le groupe comprenant les radicaux méthyl, éthyl, propyl, phényl ou les radicaux $R_1$ et $R_2$ décrits précédemment.

Les composés de l'invention sont, par exemple, les composés de formules suivantes :

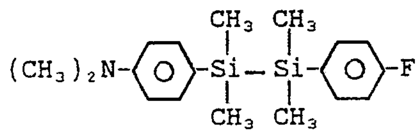

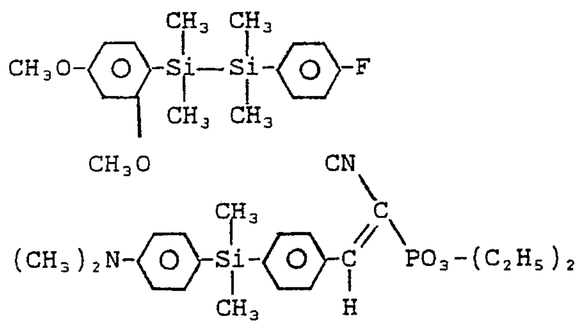

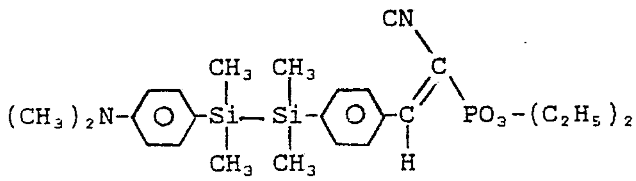

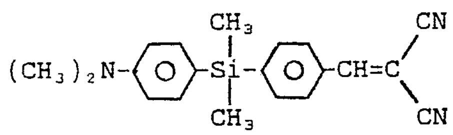

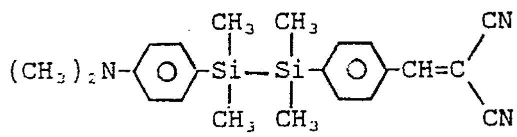

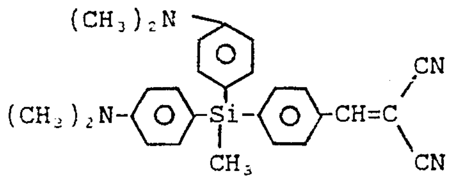

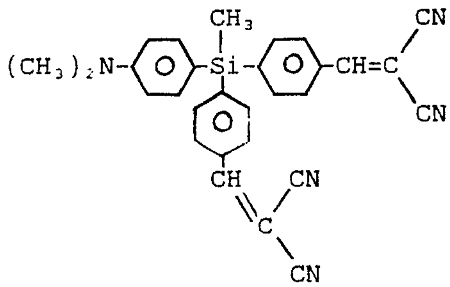

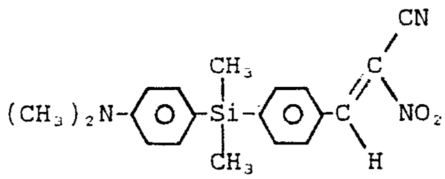

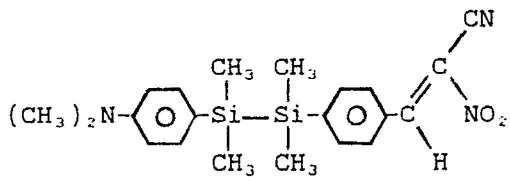

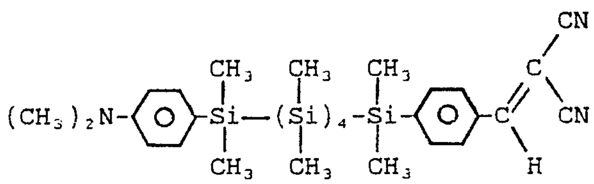

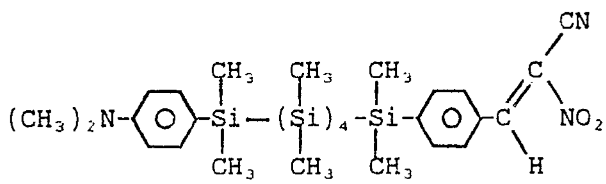

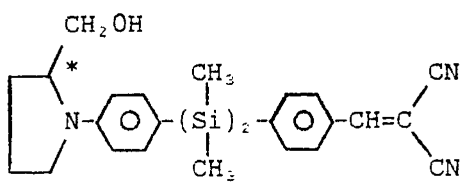

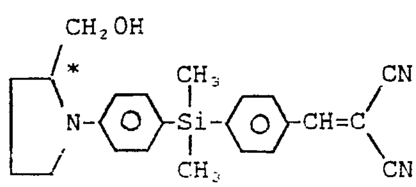

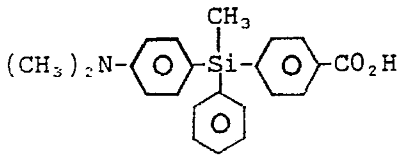

Ces composés peuvent être obtenus selon tout procédé de synthèse des composés organosiliciés connus de l'homme du métier. Ainsi, le procédé classique et le plus utilisé est la synthèse utilisant des composés organométalliques et notamment les organomagnésiens.

De manière générale, la synthèse des produits de l'invention est réalisée par réaction d'un organomagnésien comprenant le radical $R_1$ avec un halogénosilane de formule :

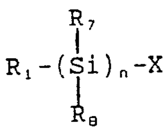

dans laquelle X est un halogène, $R_7$, $R_8$, identiques ou différents représentent $R_1$, $R_2$, $R_3$, $R_4$, un halogène. De préférence, l'halogénosilane est un organohalogénosilane comprenant soit le radical $R_3$ soit le radical $R_4$ ou les deux radicaux. Le composé obtenu réagit ensuite sur un second organomagnésien comprenant le radical $R_2$.

Bien entendu, l'ordre des réactions avec les organomagnésiens peut être inversé.

Par ailleurs, il est également possible d'utiliser comme organométallique, des organomagnésiens comprenant un ou des radicaux voisins de $R_1$ ou $R_2$, appelés ci-après $R_{10}$. Dans cette variante, le composé organosilicié obtenu est soumis à une ou plusieurs réactions pour modifier les radicaux $R_{10}$ précités voisins de $R_1$ ou $R_2$ pour obtenir la formule définitive du composé organosilicié. Ainsi, il est possible, par exemple, de soumettre le composé organosilicié à des réactions d'hydrolyse, d'amminolyse, carboxylation, carbonylation, réaction avec des composés ayant un groupement méthylène actif (réaction de KNOEVENAGEL), par exemple.

Le procédé de synthèse des composés de l'invention sera clairement décrit dans les exemples donnés ci-dessous à titre d'illustration.

Les composés de l'invention ont la propriété importante d'être actifs en optique non linéaire et donc sont susceptibles d'être utilisés dans les dispositifs de traitement des ondes, notamment dans le domaine des télécommunications à longue distance.

En effet, l'activité des matériaux en optique non linéaire est déterminée par la mesure des coefficients $\beta$, $\gamma$, d'hyperpolarisabilité des second, troisième ou énième ordre.

L'hyperpolarisabilité d'un composé est directement reliée au moment dipolaire moléculaire par la relation fondamentale

$$\underline{\mu} = \underline{\mu}^{o} + \alpha . \underline{E} + \beta \, \underline{E.E} + \gamma \, \underline{E.E.E} + ...$$

dans laquelle : $\mu$ et $\mu^{\circ}$ représentent les moments dipolaires respectivement en présence et en absence de champ électromagnétique.

E représente le champ électrique ou électromagnétique d'excitation.

$\alpha$, $\beta$, $\gamma$ représentent les coefficients de polarisabilité et d'hyperpolarisabilité.

En effet, le coefficient $\alpha$ est le coefficient de polarisabilité de la molécule et reflète son activité en optique linéaire.

Les coefficients $\beta$ et $\gamma$ représentent les coefficients d'hyperpolarisabilité respectivement de second et troisième ordre.

Ces coefficients reflètent l'anharmonicité du potentiel électrique dans la molécule et sont fortement dépendants de la symétrie de celle-ci.

Par ailleurs, les coefficients d'ordre impair, tel que le coefficient $\gamma$ ne sont jamais nuls pour toutes molécules. Au contraire, les coefficients d'ordre pair tel que le coefficient $\beta$ sont nuls pour les molécules symétriques ou centrosymétriques.

Il est intéressant d'utiliser des molécules présentant un coefficient $\beta$ non nul pour les applications en optique non linéaire telles que, par exemple, les dispositifs électrooptiques, les modulateurs électrooptiques, les amplificateurs paramétriques, les dispositifs doubleur de fréquence.

Pour apprécier et mesurer le coefficient $\beta$ des molécules, on determine celui-ci par comparaison avec celui d'une molécule de référence, a savoir, l'urée.

La mesure de l'hyperpolarisabilité moléculaire $\beta$ d'un composé est réalisée généralement en milieu solvant tel que, par exemple, l'acétone, l'eau, le diméthylsulfoxyde, par la méthode connue sous le nom de méthode EFISH, brièvement décrite ci-dessous.

La solution liquide contenant un nombre N de molécules par centimètre cube est polarisée par un champ électrique $E^{\circ}$.

Les molécules polaires s'orientent dans le champ électrique.

Un champ optique $E^{\omega}$ traverse la solution, cette dernière rayonnant une onde à l'harmonique $2\omega$

conformément à la relation
$P^{2\omega}$ N.($\gamma$ - $\beta\mu$) E° $(E^{\omega})^2$
$P^{2\omega}$ représente la polarisation pour la seconde harmonique
$\alpha$ représente le coefficient d'hyperpolarisabilité cubique et est négligeable.
$\mu$ représente le moment dipolaire de la molécule.

Ainsi, la mesure de $P^{2\omega}$ permet de calculer le produit scalaire $\beta\mu$ qui correspond au produit de la partie vectorielle du coefficient $\beta$ par le moment dipolaire $\mu$ de la molécule.

D'autres buts, détails et caractéristiques de l'invention apparaîtront plus clairement au vu des exemples donnés ci-dessous uniquement a titre indicatif et d'illustration.

Exemple 1 : synthèse du 1 (parafluorophényldiméthyl) 2(para-N,N diméthylaniline, diméthyl)disilane.

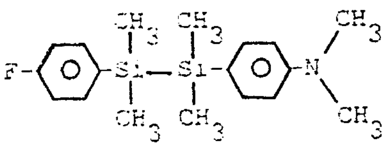

Composé I

1ère étape : fabrication du 1(parafluorophényl, diméthyl), 2(diméthylchloro) disilane.

On synthétise tout d'abord le magnésien du parafluorobromobenzène par réaction de copeaux de magnésium avec du parafluorobromobenzène dans du tétrahydrofuranne comme solvant. Cette synthèse est conduite de manière analogue à toute fabrication de magnésien, selon les mêmes conditions.

Le magnésien obtenu est mis immédiatement en réaction, toujours en milieu, tétrahydrofuranne avec le tétraméthyldichlorodisilane. L'exothermicité de la réaction est contrôlée par la vitesse d'alimentation du magnesien dans la solution de tétraméthyldichlorodisilane dans le tétrahydrofuranne.

Après chauffage à reflux et élimination sous vide du tétrahydrofuranne, on élimine les sels de magnésium formés par filtration sous azote du milieu réactionnel dissout dans l'hexane.

Le 1(parafluorophényl, diméthyl), 2(diméthylchloro)disilane est alors extrait du milieu réactionnel par distillation sous vide.

La structure du produit obtenu est confirmée par Spectrographie de masse et RMN.

Les quantités introduites sont les quantités stoechiométriques ou en léger excès notamment pour le magnésium en copeaux.

Le rendement pondéral de la réaction est de l'ordre de 67 %.

2° étape :

Selon le même mode opératoire que la 1° étape, on synthétise le magnésien du parabromo,N,N diméthylaniline, en milieu tétrahydrofuranne.

Le magnésien ainsi obtenu est ajouté dans une solution de 1(parafluorophényl, diméthyl), 2(diméthylchloro)disilane dans le tétrahydrofuranne.

Après filtration des sels de magnésium formés, lavage à l'eau et séchage du milieu réactionnel, le 1(parafluorophényl, diméthyl), 2(para-N,N diméthylaniline, dimethyl) disilane est cristallisé dans l'hexane et séché après filtration.

Les quantités de réactifs mise en oeuvre sont les quantités stoechiométriques.

Le produit obtenu est un solid blanc dont la pureté est supérieure à 95 %, le rendement global de la synthèse est d'environ 85 %.

Le point de fusion du composé obtenu est de 52°C.

L'analyse par spectrométrie IR, UV, spectrométrie de masse ou RMN confirme la structure du composé.

Example 2 : préparation du paracarboxyphényl, para-N,N diméthylaniline, méthyl, phénylsilane

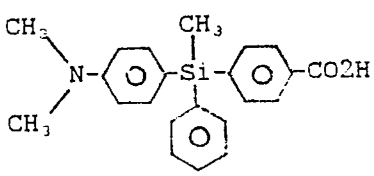

Composé (II)

Ce composé est synthétisé selon un mode opératoire analogue à celui de l'exemple 1, toutefois les produits de départ sont respectivement le paradibromobenzène, le méthyl, phényl, dichlorosilane et la parabromo N,N diméthylaniline.

Le produit obtenu, séparé du milieu réactionnel par distillation sous vide est une huile orangée visqueuse, dont les analyses par spectrométrie IR, UV, de masse et RMN confirment qu'il a la formule suivante :

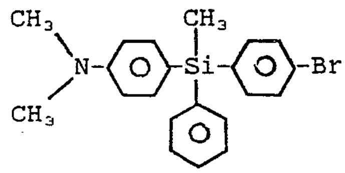

Pour synthétiser le composé II, on effectue une carboxylation du composé ci-dessus, en milieu tétrahydrofuranne, par formation d'un magnésien par réaction sur du magnésium en copeaux, puis après chauffage à reflux du milieu réactionnel pendant trois heures, on fait buller durant 1 heure et demie environ du gaz carbonique dans le milieu réactionnel refroidi à la température ambiante.

Le mélange réactionnel est ensuite porté à reflux pendant une heure puis le composé est hydrolysé par addition d'eau acidulée.

Le composé II est extrait du milieu réactionnel par lavage à l'éther, en milieu acide.

L'éther est ensuite évaporé. L'huile résultante est dissoute à chaud dans l'hexane. Après refroidissement le composé II cristallise sous forme d'une solide jaune paille de point de fusion égal à 80° C, avec un rendement pondéral de la synthèse égal à 30 %.

Les analyses de spectrométrie IR, UV, de masse et RMN confirment la structure du composé II.

Examples 3 à 13

Selon les procédés décrits dans les exemples 1 ou 2, on a préparé les produits du tableau I. Dans ce tableau, sont également indiqués les produits de départ utilisés, et les caractéristiques du produit obtenu.

Dans ces exemples, on synthétise dans un premier temps du composé organosilicié comprenant un ou plusieurs groupements donneurs d'électrons $R_1$ par synthèse magnésienne. Les groupements accepteurs d'électrons $R_2$ sont obtenus par transformation d'un substituant d'un radical aryl fixé sur la molécule organosiliciée par synthèse magnésienne dans un deuxième temps.

Ainsi, pour obtenir les composés IV et V, on met en oeuvre la réaction de Knoevenagel sur le composé organosilicié comprenant un radical aryl substitué par un radical formyl (de dernier étant obtenu par action du diméthyl formamide sur l'organomagnésium correspondant) avec le composé $CN\text{-}CH_2\text{-}PO_3(C_2H_5)_2$.

Pour les composés VI à IX et XII, on fait réagir le composé $CN\text{-}CH_2\text{-}CN$, tandis que pour les composés X, XI et XIII, le composé $NO_2\text{-}CH_2\text{-}CN$ à la place du composé $CN\text{-}CH_2\text{-}PO_3(C_2H_5)_2$.

Les structures des produits obtenus ont été confirmées par analyse spectrométrie infra-rouge UV, spectrographie de masse et RMN.

TABLEAU I

| Ex | Composé | FORMULE | Nature | PRODUITS DE DEPART |
|---|---|---|---|---|
| 3 | III | 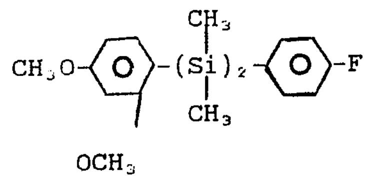 | huile | 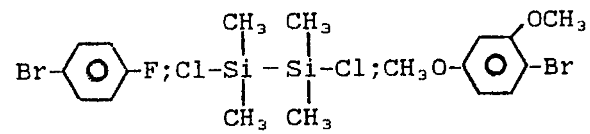 |
| 4 | IV | 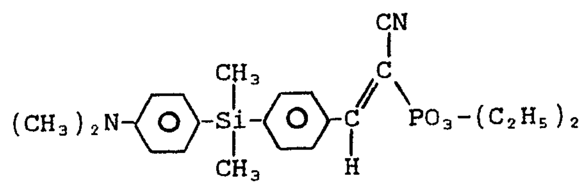 | huile | 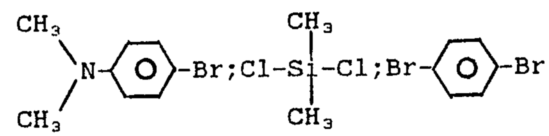 |
| 5 | V | 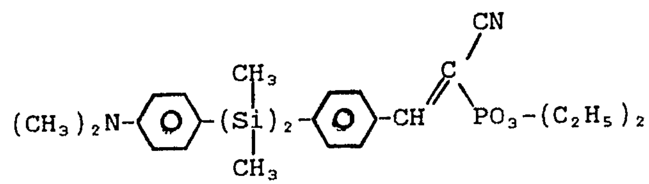 | huile | 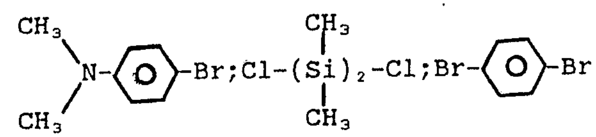 |
| 6 | VI | 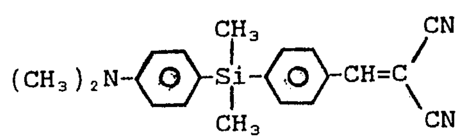 | huile | 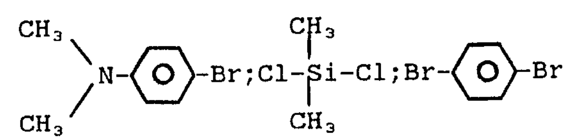 |

| Ex | Composé | FORMULE | Nature | PRODUITS DE DEPART |
|---|---|---|---|---|
| 7 | VII | 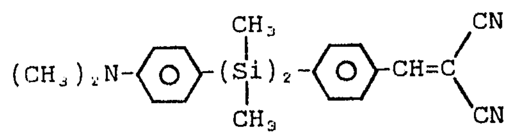 | solide | 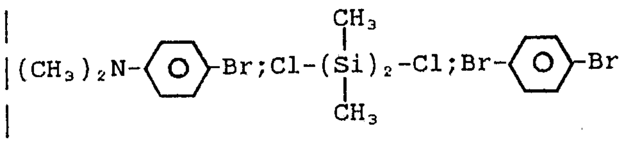 |
| 8 | VIII | 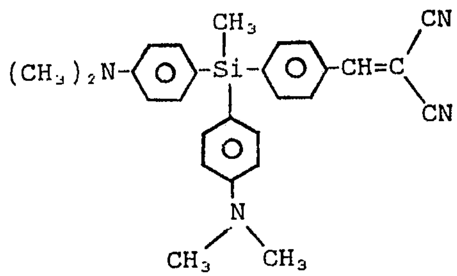 | solide | 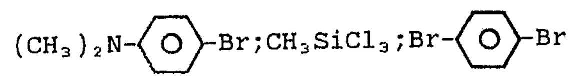 |
| 9 | IX | 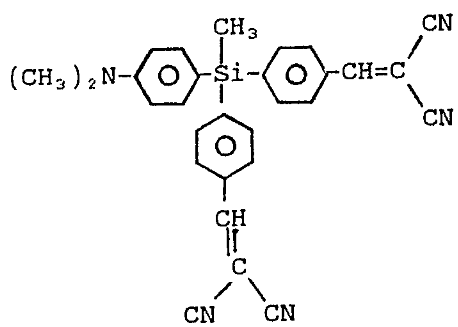 | solide | 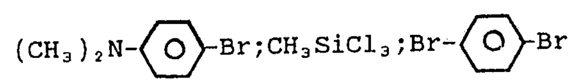 |

| Ex | Composé | Formule | Nature | Produits de départ |
|---|---|---|---|---|
| 10 | X | 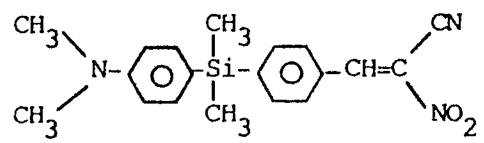 | Huile | 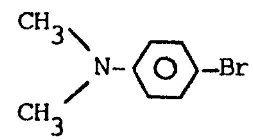 ; Si$(CH_3)_2$ $Cl_2$ ; 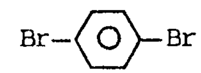 |
| 11 | XI | 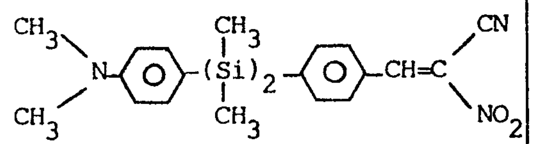 | Solide | 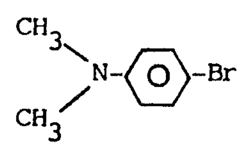 ; 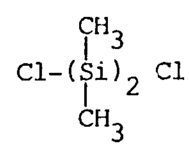 ; 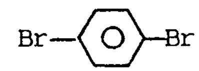 |
| 12 | XII | 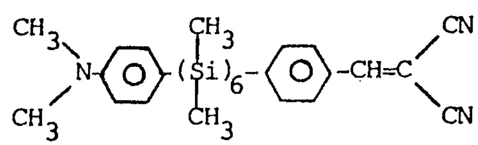 | Solide | 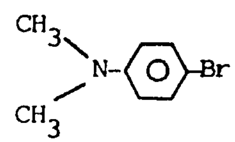 ; 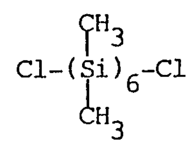 ; 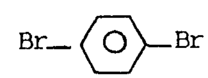 |
| 13 | XIII | 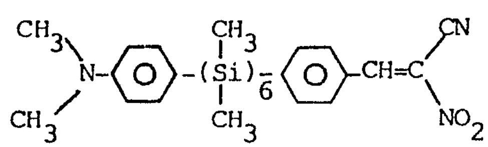 | Solide | 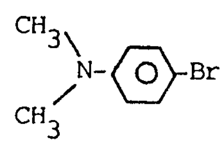 ; 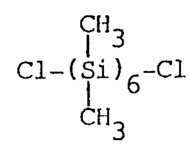 ; 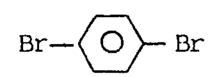 |

Ces molécules ont été testées dans les dispositifs électrooptiques et se sont révélées actives en optique non linéaire.

Les résultats de la détermination du coefficient d'hyperpolarisabilité β pour certaines de ces molécules sont rassemblés dans le tableau II ci-dessous.

TABLEAU II

| Composés | βμ en D.esu |
|---|---|
| I | $15{,}7 \cdot 10^{-30}$ |
| VI | $96 \cdot 10^{-30}$ |
| VII | $210 \cdot 10^{-30}$ |
| urée | $2 \cdot 10^{-30}$ |

Ces mesures montrent que les molécules synthétisées ont un coefficient d'hyperpolarisabilité β non nul et pouvant être nettement supérieur à celui de l'urée.

Les composés de l'invention sont utilisés dans des composants de dispositifs électrooptiques sous forme de matériaux, tel que par exemple sous forme de film, par incorporation dans une matière, tel qu'un polymère, une résine etc. selon des techniques classiques et connues.

Ainsi, à titre d'exemple, les molécules préparées selon les exemples 1 à 13 sont incorporées dans un film de polymère transparent de 10 à 200 μm d'épaisseur, comme cela est décrit dans le brevet européen n° 218938. Comme polymères convenables, on peut citer, par exemple, le polyméthylméthacrylate, le polystyrène atactique.

Le film de polymère est chauffé à une température supérieure à sa température de transition vitreuse (Tg), puis soumis à un champ électrique intense pour orienter les molécules actives conformes à l'invention.

Le film est ensuite refroidi à une température inférieure à la température de transition vitreuse Tg pour ainsi geler la position orientée des molécules actives.

Un film contenant des molécules actives orientées de l'invention présente un coefficient électrooptique r et un coefficient de génération de second harmonique comparables et même supérieurs à ceux des cristaux inorganiques habituellement utilisés dans ces applications tels que par exemple, le diphtalate de potassium, le diphtalate d'ammonium, le nitrate de lithium etc.

**Revendications**

1. Composés organosiliciés de formule générale :

$$R_1-(\overset{\displaystyle R_3}{\underset{\displaystyle R_4}{Si}})_n-R_2$$

dans laquelle :
- n est un nombre entier compris entre 1 et 20
- $R_1$ représente un groupement donneur d'électrons
- $R_2$ représente un groupement accepteur d'électrons
- $R_3$ représente un radical alkyl comprenant de 1 à 8 atomes de carbone, l'hydrogène, un radical aryl, un radical $R_1$ ou $R_2$
- $R_4$ représente un radical alkyl comprenant de 1 à 8 atomes de carbone, l'hydrogène, un radical aryl, un radical $R_1$ quand $R_3$ ne représente pas un radical $R_2$, ou un radical $R_2$ quand $R_3$ ne représente pas un radical $R_1$.

2. Composés organosiliciés selon la revendication 1, caractérisés en ce que le groupement $R_1$ a la formule générale suivante :
- $R_5$-Dm

dans laquelle :
- $R_5$ représente un radical arylène
- D identique ou différent représente l'hydrogène ou un radical donneur d'électrons choisi dans le groupe

comprenant les radicaux amino, alkylamino, dialkylamino, arylamino, hydroxyl, thiolo, alkylthio, arylthio, alkoxy, aryloxy, halogénoalkyl, oxy,

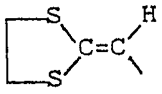 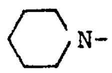 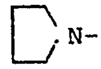 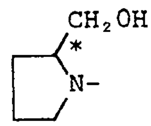

m est un nombre entier égal à 1, 2 ou 3

D ne représentant pas l'hydrogène quand le groupement $R_4$ est un radical aryl non substitué par un ou plusieurs groupements accepteurs d'électrons.

3. Composés selon la revendication 1 ou 2, caractérisés en ce que le groupement $R_2$ représente le radical pyridinyloxy, ou un radical de formule générale suivante :

$-R_6-Ap$

dans laquelle :

- $R_6$ représente un radical arylène
- p est un nombre entier égal à 1, 2 ou 3
- A identique ou différent représente l'hydrogène ou un radical accepteur d'électrons choisi dans le groupe comprenant les radicaux halogéno, nitro, cyano, nitrosile, d'ammonium quaternaire, pyridinyloxy, $CF_3$, d'alkyl ammonium quaternaire, acyl, alkoxysulfonyl, aryloxysulfonyl, ou les radicaux de formules suivantes

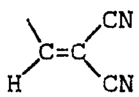 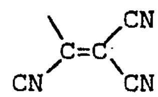 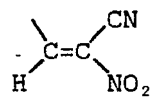

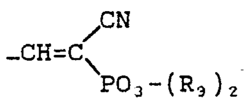 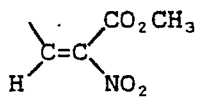

- $R_9$ représentant un radical alkyl de 1 à 6 atomes de carbone ou un radical aryl,

et en ce que A ne représente pas l'hydrogène quand $R_1$ est un radical arylène non substitué par un ou plusieurs radicaux donneur d'électrons.

4. Composés selon la revendication 1, 2 ou 3, caractérisés en ce que $R_3$, $R_4$ sont choisis dans le groupe comprenant $R_1$, $R_2$, les radicaux méthyl, éthyl, propyl et phényl.

5. Composés selon l'une des revendications 1 à 4, caractérisés en ce que $R_1$ est choisi dans le groupe comprenant les radicaux

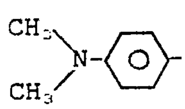 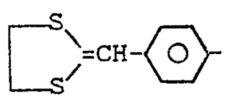 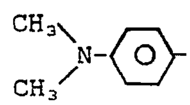

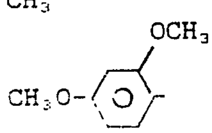 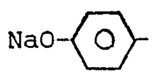 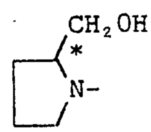

6. Composés selon l'une des revendications 1 à 5, caractérisés en ce que $R_2$ est choisi dans le groupe comprenant les radicaux

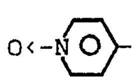 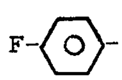 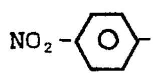 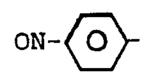

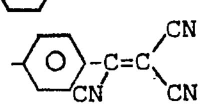 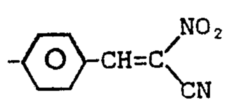 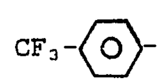

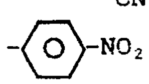 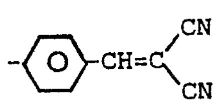 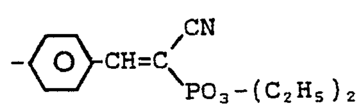

7. Composés selon l'une des revendications précédentes caractérisés en ce qu'ils sont choisis dans le groupe comprenant

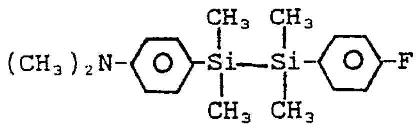

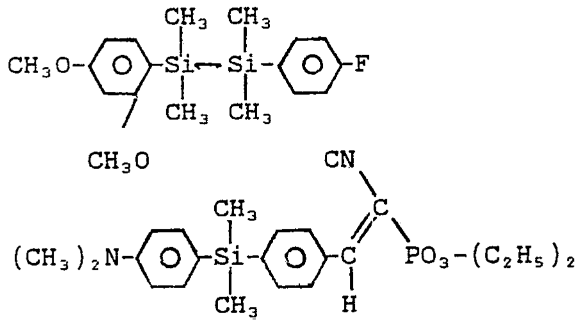

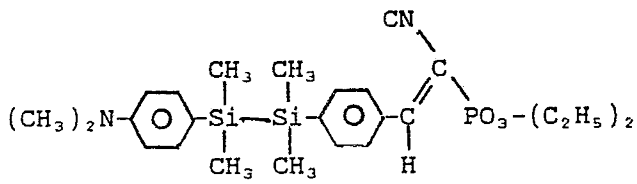

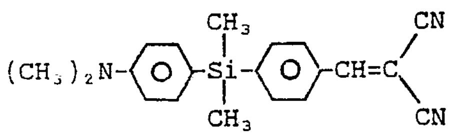

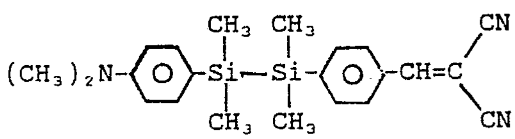

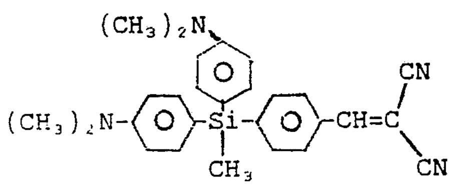

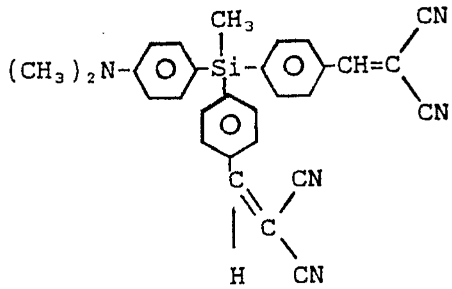

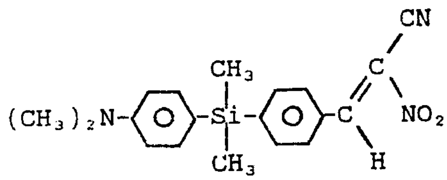

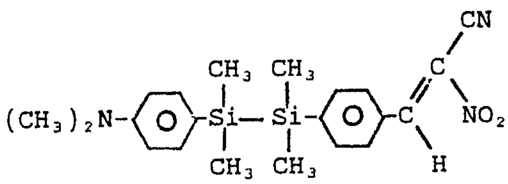

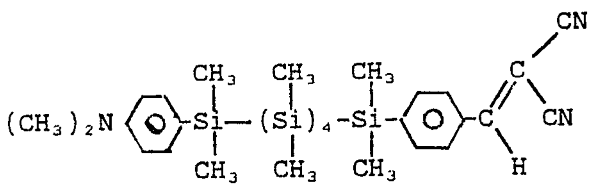

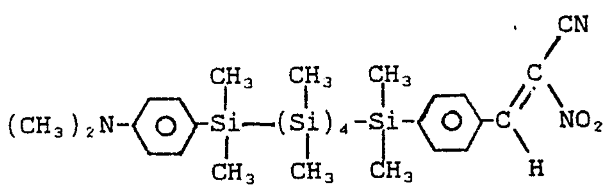

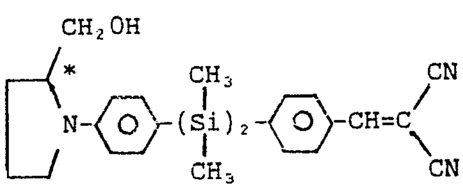

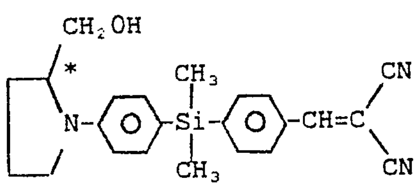

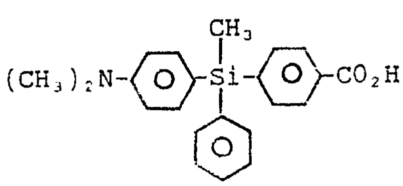

8. Composés selon l'une des revendications 1 à 7, caractérisés en ce qu'ils sont hyperpolarisables et ont un coefficient d'hyperpolarisabilité β du second ordre supérieur à zéro.

9. Composés selon la revendication 8, caractérisés en ce que la coefficient d'hyperpolarisabilité β est supérieur au coefficient β de l'urée.

10. Matériau actif en optique non linéaire et notamment susceptible de générer une harmonique du second ordre caractérisé en ce qu'il comprend au moins un des composés selon l'une des

revendications 1 à 9.

11. Dispositif optoélectrique comprenant un matériau actif en optique non linéaire selon la revendication 10.

12. Procédé de fabrication des composés organosiliciés selon l'une des revendications 1 à 9, caractérisé en ce qu'il consiste à

(i) synthétiser un magnésien du composé $R_1$-X, X étant un halogène.

(ii) faire réagir ce magnésien sur un halogénosilane de formule :

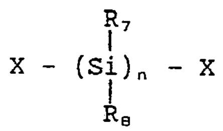

dans laquelle :

X est un halogène,

$R_7$, $R_8$, identiques ou différents,

représentent $R_1$, $R_2$, $R_3$, $R_4$, un halogène.

(iii) synthétiser le magnésien du composé $R_2$-X, X étant un halogène

(iv) faire réagir le magnésien de l'étape (iii) sur le composé obtenu à l'étape (ii)

(v) extraire le composé ainsi formé du milieu réactionnel.

13. Procédé de fabrication des composés organosiliciés selon l'une des revendications 1 à 9, caractérisé en ce qu'il consiste à

(i) synthétiser un magnésien du composé $R_1$-X, X étant un halogène

(ii) faire réagir ce magnésien sur un halogénosilane de formule :

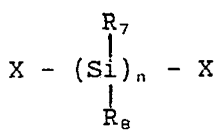

dans laquelle :

X est un halogène,

$R_7$, $R_8$, identiques ou différents,

représentent $R_1$, $R_2$, $R_3$, $R_4$, un halogène.

(iii) synthétiser le magnésien du composé $R_{10}$-X,

X étant un halogène

$R_{10}$ représentant un groupement aryle substitué par au moins un halogène,

(iv) faire réagir la magnésien de l'étape (iii) sur le composé obtenu à l'étape (ii)

(v) transformer la fonction halogène du radical $R_{10}$ en radical formyl ou carboxyl,

(vi) transformer le radical formyl en radical A,

(vii) extraire le composé ainsi formé du milieu réactionnel.

14. Procédé selon la revendication 13, caractérisé en ce que la transformation de l'étape (vi) est obtenue par la mise en oeuvre d'une réaction choisie dans le groupe comprenant l'hydrolyse, l'amminolyse, le carbonylation, la réaction de Knoevenagel.